# EUROPEAN PATENT SPECIFICATION

(11) **EP 1 197 090 B1**
(45) Date of publication and mention of the grant of the patent: **05.12.2007**
(21) Application number: 00950383.0
(22) Date of filing: 13.07.2000
(51) Int. Cl.: H04N 7/24

(54) **METHODS AND APPARATUS FOR SELECTING MULTICAST IP DATA TRANSMITTED IN BROADCAST STREAMS**
VERFAHREN UND VORRICHTUNG ZUR AUSWAHL VON MEHRFACH GESENDETEN IP-DATEN DIE INNERHALB EINES RUNDFUNKSTROMES ÜBERTRAGEN WERDEN
PROCEDES ET DISPOSITIFS DESTINES A CHOISIR DES DONNEES IP DE MULTIDIFFUSION TRANSMISES DANS DES FLUX RADIODIFFUSES

(30) Priority: 13.07.1999 US 143428 P; 04.04.2000 US 194569 P
(43) Date of publication of application: 17.04.2002
(73) Proprietor: SUN MICROSYSTEMS, INC., Palo Alto, California 94303 (US)
(72) Inventor: COURTNEY, Jonathan, D., San Jose, CA 95125 (US); RIVAS, Jesus, David, San Francisco, CA 94121 (US); YE, Tao, Sunnyvale, CA 94087 (US)
(74) Representative: Gover, Richard Paul
(86) International application number: PCT/US2000/019394
(87) International publication number: WO 2001/005158

(56) References cited:
- EP-A- 0 844 766
- WO-A-97/20413
- BORMANN C ET AL: "IP-MULTICAST UEBER SATELLIT" FUNKSCHAU,DE,FRANZIS-VERLAG K.G. MUNCHEN, vol. 71, no. 21, 2 October 1998 (1998-10-02), pages 55-57, XP000851045 ISSN: 0016-2841
- CLAUSEN H D ET AL: "MPEG-2 AS A TRANSMISSION SYSTEM FOR INTERNET TRAFFIC" IEEE INTERNATIONAL PERFORMANCE, COMPUTING AND COMMUNICATIONS CONFERENCE,US,NEW YORK, NY: IEEE, February 1998 (1998-02), pages 101-107, XP000668934 ISBN: 0-7803-4469-3

## Description

### BACKGROUND OF THE INVENTION

### 1. FIELD OF THE INVENTION

The present invention relates generally to computer software. More particularly, the present invention relates to methods and apparatus for selecting multicast data transmitted in broadcast streams.

### 2. DESCRIPTION OF RELATED ART

The digital television revolution is one of the most significant events in the history of broadcast television. With the advent of digital television, high speed data transfer is possible via satellite, cable and terrestrial television channels. Digital television offers users more channels as well as significantly improved video and audio quality. Most importantly, digital television ushers in the age of true interactive television. For instance, digital receivers will be able to offer users a variety of enhanced services, from simple interactive quiz shows, to internet, and a mix of television and web-type content. As the market for digital television grows, content developers are looking for a feature-rich, cost-effective, and reliable software platform upon which to build the next generation of interactive television services such as Electronic Programming Guides, Video-On-Demand, and Enhanced Broadcasting.

Java is a leading commercial object-oriented language designed as a portable language that can run on any compatible device that supports the JAVA^{™} PLATFORM. For instance, Java is incorporated into all major Web browsers. Thus, Java runs on any web-enabled computer via that computer's Web browser. As such, Java offers great promise as the software platform for set-top boxes and digital television.

In object-oriented programming, code and data are merged into objects. Each object is defined via its class, which determines the properties and behavior of an object. In other words, objects are individual instances of a class.

In an interactive digital television environment, it will be common to receive data from multiple sources. For instance, a television program (i.e., service) received by a particular channel might consist of audio, video as well as other data (e.g. IP data streams). With the advent of digital television, it would be desirable if the data received by a television receiver could include data from the Internet and therefore conform to the Internet Protocol (IP). Moreover, it would be desirable if each channel could receive data from multiple sources.

When a television channel broadcasts digital data to viewers, it is impossible to address digital data to each viewer individually (e.g., through a single address). Thus, in order to send digital data to multiple television viewers simultaneously, multicast addressing must be used. However, no central repository or mechanism exists to verify that the same multicast address is not used by multiple sources (e.g., channels). It is therefore impossible to distinguish data streams by the associated multicast address. Moreover, it would be desirable to transmit data received from other sources such as those available on the Internet on two different channels. It is therefore possible that the data received by these multiple sources may conflict. This is particularly important since picture-in-picture capability is available in most televisions. As a result, it is possible that conflicting data may be received by multiple channels that are being simultaneously displayed via a picture-in-picture option. Thus, conflicting data may be provided to a single channel through multiple data streams or through a single data stream received by each of the channels. In either case, when this data is ultimately provided to one or more television channels, it would be undesirable if this conflicting data were broadcast to television viewers via the wrong television channel or presented in an incorrect manner by a television channel.

EP-0844766 describes a method for finding the address of a data source, *i.e.* the physical parameters of a satellite channel or cable channel used for broadcasting of the data transmission stream, in a data transmission system. The data transmission stream includes program packets and information packets. The information packets include a two part link including naming instructions, in accordance with the DVB (digital video broadcasting) practice, which identifies the data sources. The first part of the link is in text form. In order to determine a data source, a set top box connects to a name server which includes service information and which carries out a search of stored service information based on the link to identify the data source and then returns the physical address to the set top box in the form of a link local use address. Hence, similarly to a domain name server used to route http requests, the set top box forwards a DVB link to the name server which then resolves the DVB link into a physical address which is returned to the set top box so that the set top box can determine where to go for the source of the broadcast of the associated program.

In view of the above, it would be beneficial if a mechanism for unambiguously identifying and selecting one of the data streams associated with a particular channel could be provided. Moreover, it would be desirable if such a mechanism were designed to identify, select, and read a multicast IP data stream transmitted in a broadcast stream, even where multiple data streams are associated with the same multicast address.

The present invention enables multicast IP data transmitted in broadcast streams to be selected and received. More particularly, a network interface card has an associated IP address. However, a digital television receiver cannot identify a network interface card. Rather, a digital. television receiver communicates solely with one or more associated tuners. Thus, through the association of an IP address with each data stream, a single system may be used to read and display data associated with a network card as well as a tuner.

According to a first aspect of the invention, there is provided a method of identifying data streams in a digital television receiver, comprising obtaining a data stream locator adapted for identifying data streams, associating a data stream locator with each of a plurality of data streams, each one of the plurality of data streams being associated with one of a plurality of television channels, and mapping each data stream locator to an IP address local to the digital television receiver and uniquely identify each data stream.

Each data stream associated with a tuner is identified by a unique IP address. More particularly, a locator adapted for identifying a data stream is obtained, where the locator is associated with one of a plurality of data streams. The locator is then mapped to an IP address. Through the use of this mapping, a digital television receiver may obtain the appropriate locator to read the associated data stream. In this manner each data stream may be uniquely identified, even where multiple data streams are associated with a single multicast address.

It can be determined whether the IP address corresponds to a data stream locator associated with a data stream. When it is determined that the IP address corresponds to a data stream locator, a tuner is instructed to read the data stream associated with the data stream locator. However, when it determined that the IP address does not correspond to a data stream locator, a network card identified by the IP address is instructed to read data from its associated network. However, all information in a particular data stream may not be relevant. More particularly, it may be desirable to filter the information in the data stream. Thus, since each data stream may be associated with a plurality of multicast IP addresses, a multicast group address may then be specified to identify the appropriate multicast IP data transmitted in the broadcast stream. Packets addressed to the multicast group address may then be received by either a tuner or a network interface card. Accordingly, a single system may be used to select and receive multicast IP data transmitted in broadcast. streams via a network card or a tuner.

According to a further aspect of the invention, there are provided computer program code executable to provide the method aspect of the invention, and a computer program product storing such code as set out in claims 22 and 23.

According to a further aspect of the invention, there is provided a digital television receiver for selecting multicast IP data transmitted in broadcast streams, as set out in claim 24.

### BRIEF DESCRIPTION OF THE DRAWINGS

The invention, together with further advantages thereof, may best be understood by reference to the following description taken in conjunction with the accompanying drawings in which:
FIG. 1 is a block diagram illustrating a digital television receiver in which the present invention may be implemented.
FIG. 2 is a block diagram illustrating a system in which the present invention may be implemented.
FIG. 3 is a process flow diagram illustrating a method of receiving packets addressed to a multicast address in accordance with an embodiment of the invention.
FIG. 4 is a diagram illustrating the use of locators to identify data streams in accordance with an embodiment of the invention.
FIG. 5 is a diagram illustrating the use of an interface map to map a data stream to an IP address through the use of a locator in accordance with an embodiment of the invention.
FIG. 6 is a process flow diagram illustrating a method of identifying a data stream using an interface map such as that illustrated in FIG. 5.
FIG. 7 is a process flow diagram illustrating a method of performing the set interface method shown at block 306 of FIG. 3 in accordance with an embodiment of the invention.
FIG. 8 is a block diagram illustrating a typical, general-purpose computer system suitable for implementing the present invention.

### DETAILED DESCRIPTION OF THE PREFERRED EMBODIMENTS

In the following description, numerous specific details are set forth in order to provide a thorough understanding of the present invention. It will be apparent, however, to one skilled in the art, that the present invention may be practiced without some or all of these specific details. In other instances, well known process steps have not been described in detail in order not to unnecessarily obscure the present invention.

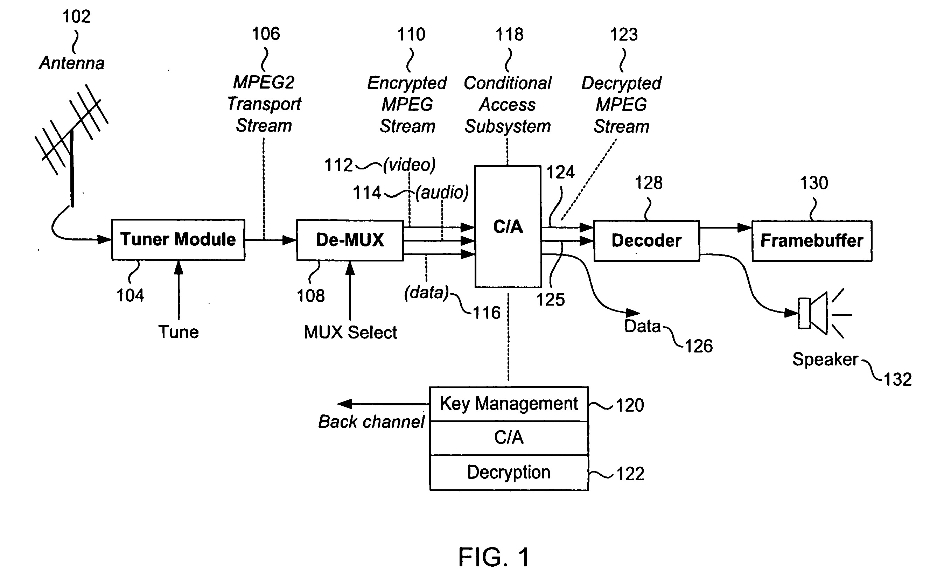

The invention is described within the context of a digital television and digital television receiver. FIG. 1 is a block diagram illustrating an exemplary digital television receiver. As shown, a signal is received via antenna 102 and tuned by tuner module 104, producing MPEG2 transport stream 106. De-multiplexer 108 then produces encrypted MPEG streams 110 including a video stream 112, an audio stream 114, and one or more data streams 116. These three streams are then processed by conditional access subsystem 118. For instance, the conditional access subsystem 118 may utilize key management information 120 as well as decryption information 122 (e.g., decryption algorithms). The conditional access subsystem 118 produces decrypted MPEG streams 123 including a video stream 124 and audio stream 125 as well as data 126, all of which are decrypted. A decoder 128 then processes the decrypted MPEG stream 123, and forwards the decoded video data to frame buffer 130 and transmits the decoded audio data to speaker 132.

A Java Virtual Machine is one platform that may be used to implement the present invention to process information received by a digital television receiver such as that illustrated in FIG. 1. More particularly, when the data 126 (e.g., broadcast data stream) is processed, it may be desirable to process information such as a downloaded application provided in the data 126. Moreover, each associated service or program provided by a channel may include one or more data streams, as represented by the data 126 as described above with reference to FIG. 1.

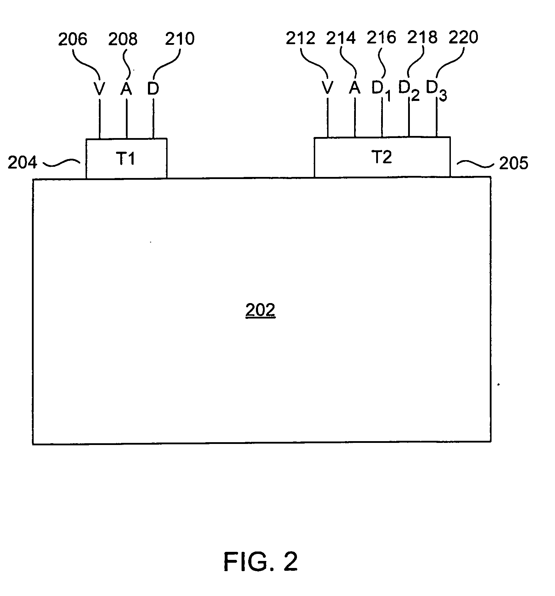

FIG. 2 is a block diagram illustrating an exemplary system in which the present invention may be implemented. A digital television receiver 202 is shown to include a first television tuner 204 and a second television tuner 205. A receiver typically requires a tuner for each different picture (e.g., picture-in-picture) provided. Thus, when a receiver includes two or more tuners, multiple channels may be simultaneously be available to a television viewer. As shown, the first tuner 204 has an associated video stream 206, audio stream 208 and data stream 210. Similarly, the second tuner 205 has an associated video stream 212, audio stream 214, and a first data stream 216, a second data stream 218 and a third data stream 220. Thus, the second tuner 205 has three associated data streams. It would be desirable if the data streams received by the television receiver could include Internet Protocol (IP) formatted data. However, as described above, since multiple sources of data may be using the same multicast group address, it is necessary to distinguish the data streams from one another.

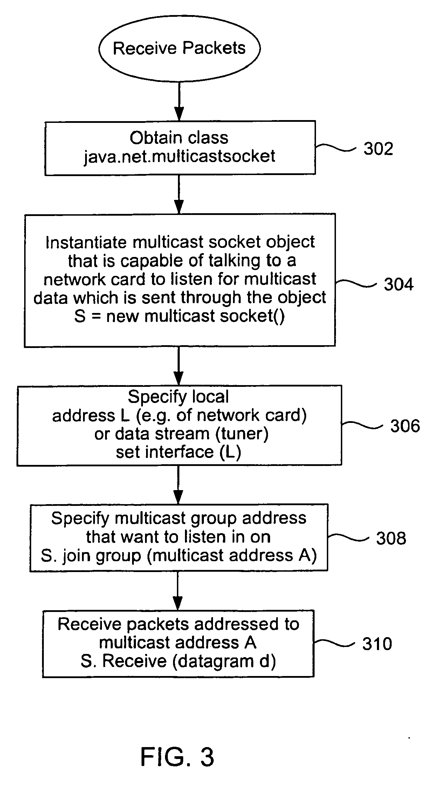

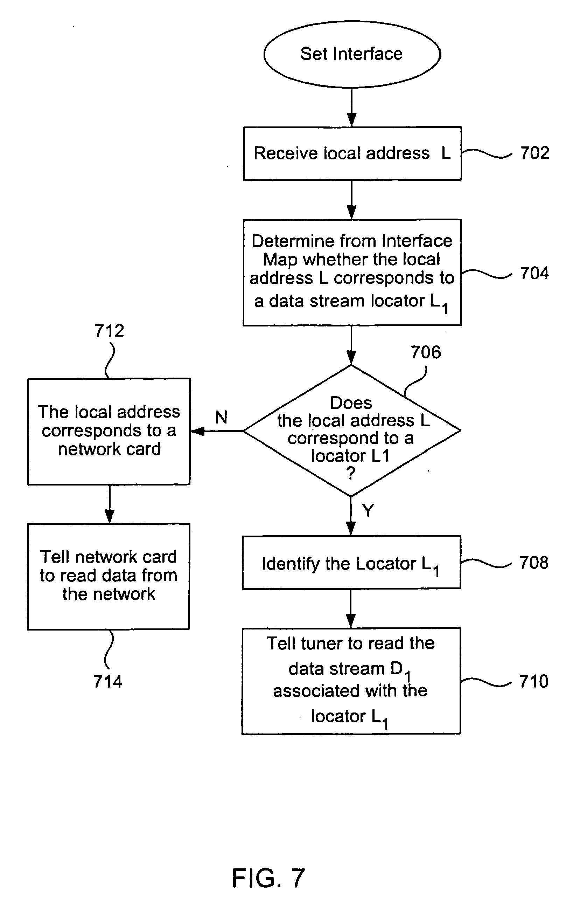

FIG. 3 is a process flow diagram illustrating a method of receiving packets addressed to a multicast address in accordance with an embodiment of the invention. In accordance with one embodiment, a method of selecting multicast IP data transmitted in broadcast streams is implemented through the customization and modification of a method of receiving packets by a network card. First, a Java.net.multicastsocket class is obtained at block 302. Next, a multicast socket object capable of listening for multicast data which is sent through the object is instantiated at block 304. More particularly, the object includes a method for specifying an IP address, a method for specifying a multicast group address to listen in on, and a method for receiving packets addressed to the multicast address. These methods are then called in blocks 306 through 310. At block 306, the method for specifying an IP address is called. More particularly, the method instructing a tuner to read a data stream associated with the IP address when the IP address corresponds to a data stream locator, and otherwise instructs a network card to read data from the network. One method of specifying an IP address is described in further detail below with reference to FIG. 7. Next, at block 308, the method for specifying a multicast group address is called to specify a multicast group address associated with the IP address (e.g., data stream). The method for receiving packets addressed to the multicast group address is then called at block 310. Garbage collection may then be performed for the multicast object when it is no longer being used.

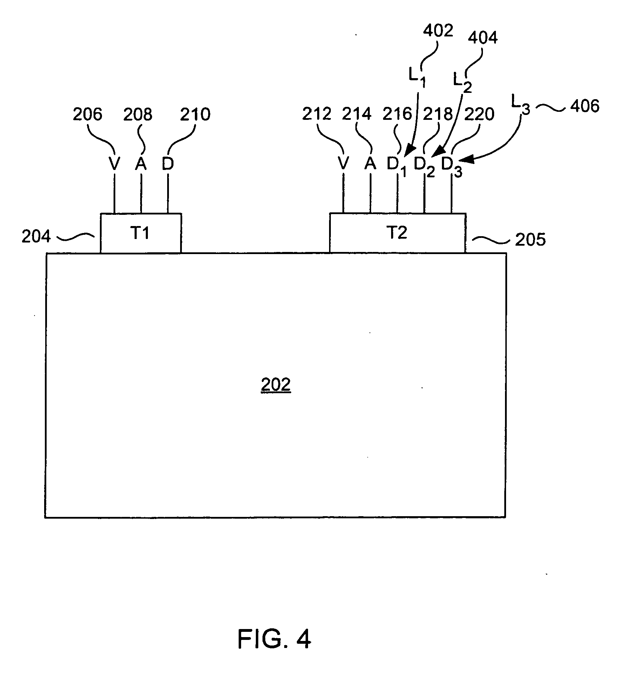

Through the modification of the method of specifying an IP address (i.e., via a set interface method) described above at block 306, multicast IP data may be received by a tuner as well as a network card. When the set interface method is called, an IP address is provided to the set interface method. More particularly, the IP address corresponds either to a network interface card or the IP address corresponds to a data stream. When the IP address is associated with a data stream rather than a network interface card, the appropriate IP address must be obtained. Thus, even when multiple sources are transmitting on the same multicast group address, the present invention enables each data stream to be uniquely identified. FIGs. 4 through 6 illustrate a mechanism for mapping an IP address to a data stream in order to uniquely identify that data stream, even where multiple data streams are associated with the same multicast group address.

FIG. 4 is a diagram illustrating the use of locators to identify data streams in accordance with an embodiment of the invention. As described above, multiple data streams 216, 218, and 220 may be associated with a single multicast IP address. In order to distinguish the data streams 216, 218 and 220 from one another, a locator adapted for identifying a data stream is associated with each of the data streams 216, 218 and 220. Each of the data streams 216, 218 and 220 may be associated with the same channel or a different channel.

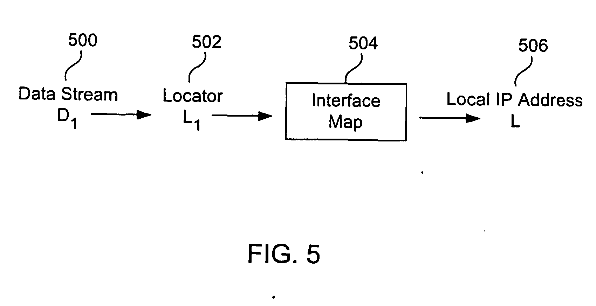

In accordance with one embodiment of the invention, an interface map is used to create a one-to-one mapping between each data stream and an associated local IP address. Thus, even where data streams are associated with the same multicast IP address, the data streams may be uniquely identified through the associated local IP addresses. FIG. 5 is a diagram illustrating the use of an interface map to map a data stream to an IP address through the use of a locator in accordance with an embodiment of the invention. As shown, for a particular data stream D1 500, a locator L1 502 is obtained. For instance, the locator 502 may be a locator object that has been obtained from an outside source. Alternatively, the locator 502 may be instantiated internally by an interface map 504. Once the interface map 504 has obtained the locator 502, a local IP address L 506 is generated and mapped to the locator L1 502. For instance, the local IP address L 506 may be obtained from a pool of available IP addresses. Thus, through the use of the interface map 504, a one-to-one correspondence is created between each data stream and a local IP address.

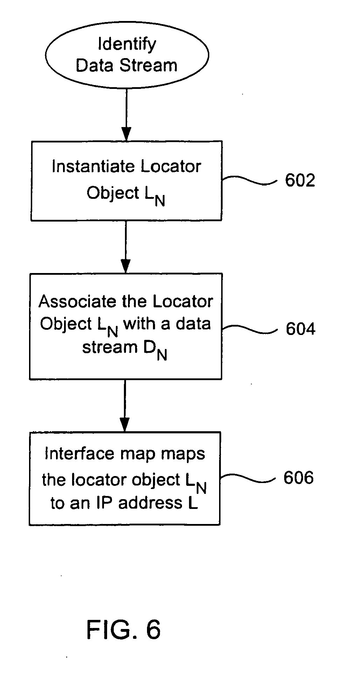

FIG. 6 is a process flow diagram illustrating a method of identifying a data stream using an interface map such as that illustrated in FIG. 5. As shown, a locator is obtained at block 602. For instance, a locator object may be instantiated or obtained from another source. The locator is then associated with one of a plurality of data streams at block 604, each one of the plurality of data streams being associated with one of a plurality of television channels. For instance, the data streams may be associated with the same channel or different channels. An interface map such as that illustrated in FIG. 5 is then used to map the locator to an IP address at block 606. For instance, the IP address may be generated from a set of local IP addresses reserved for use in private networks. The locator object may then be garbage collected when it is no longer used. In this manner, data streams associated with one or more tuners may be identified.

Once the IP address associated with the data stream locator is obtained from the interface map, the address may be used to specify the local IP address via the set interface method as shown at block 306 of FIG. 3. FIG. 7 is a process flow diagram illustrating a method of performing the set interface method shown at block 306 of FIG. 3 in accordance with an embodiment of the invention. Once a local IP address is obtained at block 702, it is determined from the interface map whether the local IP address corresponds to a data stream locator associated with a data stream at block 704. At block 706, when it is determined that the IP address corresponds to a data stream locator associated with a data stream, the data stream associated with the data stream locator is selected. More particularly, the digital television receiver may use the locator to read the associated data stream. Thus, the locator is identified at block 708 and a tuner is instructed to read the data stream associated with the locator at block 710. For instance, the tuner may be a tuner that is tuned to the data stream or it may simply be a tuner that is currently unused. When it is determined at block 706 that the IP address does not correspond to a data stream locator, the local address corresponds to a network card as shown at block 712 and the network card is instructed to read data from the network at block 714. When the IP address is no longer being used to read the data stream, the IP address may be released for future use. For instance, the interface map may be instructed to release the IP address for future use when it is no longer in use.

Although the IP address has been specified, there may be multiple multicast addresses associated with the IP address. Thus, once the tuner or network card has been instructed to read the data identified by the IP address, a multicast group address associated with the IP address is specified as described above with reference to block 308. Packets addressed to the multicast address may then be received as shown at block 310.

Through the use of the present invention, an IP address may be used to specify a network card or a data stream associated with a tuner. In this manner each data stream may be uniquely identified, even where multiple data streams are associated with a single multicast address. Moreover, through the mapping of an IP address to each data stream, an existing system which is capable of reading data associated with a network card may easily be modified for use with a tuner.

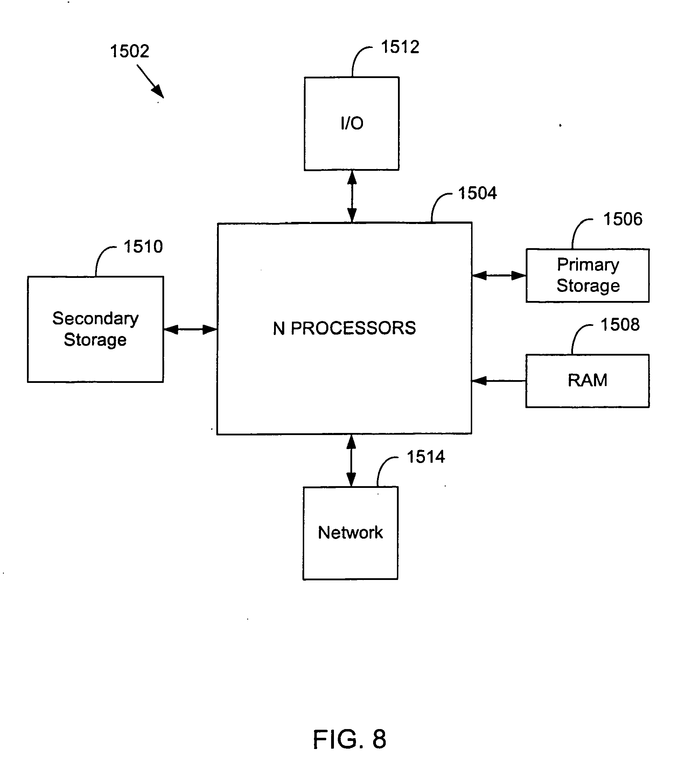

The present invention may be implemented on any suitable computer system. FIG. 8 illustrates a typical, general-purpose computer system 1502 suitable for implementing the present invention. The computer system may take any suitable form. For example, the computer system may be integrated with a digital television receiver or set top box.

Computer system 1530 or, more specifically, CPUs 1532, may be arranged to support a virtual machine, as will be appreciated by those skilled in the art. The computer system 1502 includes any number of processors 1504 (also referred to as central processing units, or CPUs) that may be coupled to memory devices including primary storage device 1506 (typically a read only memory, or ROM) and primary storage device 1508 (typically a random access memory, or RAM). As is well known in the art, ROM acts to transfer data and instructions uni-directionally to the CPUs 1504, while RAM is used typically to transfer data and instructions in a bi-directional manner. Both the primary storage devices 1506, 1508 may include any suitable computer-readable media. The CPUs 1504 may generally include any number of processors.

A secondary storage medium 1510, which is typically a mass memory device, may also be coupled bi-directionally to CPUs 1504 and provides additional data storage capacity. The mass memory device 1510 is a computer-readable medium that may be used to store programs including computer code, data, and the like. Typically, the mass memory device 1510 is a storage medium such as a hard disk which is generally slower than primary storage devices 1506, 1508.

The CPUs 1504 may also be coupled to one or more input/output devices 1512 that may include, but are not limited to, devices such as video monitors, track balls, mice, keyboards, microphones, touch-sensitive displays, transducer card readers, magnetic or paper tape readers, tablets, styluses, voice or handwriting recognizers, or other well-known input devices such as, of course, other computers. Finally, the CPUs 1504 optionally may be coupled to a computer or telecommunications network, e.g., an internet network or an intranet network, using a network connection as shown generally at 1514. With such a network connection, it is contemplated that the CPUs 1504 might receive information from the network, or might output information to the network in the course of performing the above-described method steps. Such information, which is often represented as a sequence of instructions to be executed using the CPUs 1504, may be received from and outputted to the network, for example, in the form of a computer data signal embodied in a carrier wave.
- Although illustrative embodiments and applications of this invention are shown and described herein, many variations and modifications are possible which remain within the scope of the invention, and these variations would become clear to those of ordinary skill in the art after perusal of this application. For instance, the present invention is described as being implemented within the context of a digital television receiver. However, the present invention may be used in other contexts. Moreover, although the present invention is described as being implemented on a JAVA PLATFORM, it may also be implemented on a variety of platforms. Moreover, the above described process blocks are illustrative only. Therefore, the present invention may be performed using alternate process blocks as well as alternate data structures. Accordingly, the present embodiments are to be considered as illustrative and not restrictive, and the invention is not to be limited to the details given herein, but may be modified within the scope and equivalents of the appended claims.

## Claims

1. A method of identifying multicast IP data streams in a digital television receiver comprising a tuner and a network card connected to a network, the method being carried out at the digital television receiver and comprises:
obtaining (602) a data stream locator adapted for identifying data streams received at the digital television receiver;
associating (604) a data stream locator with each of a plurality of data streams, each one of the plurality of data streams being associated with one of a plurality of television channels;
mapping (606) each data stream locator to an IP address which is local to the digital television receiver and which uniquely identifies each data stream; and
instructing the tuner to read a data stream associated with an IP address when the IP address corresponds to a data stream locator and otherwise instructing the network card to read data from the network.

2. The method as recited in claim 1, further comprising:
generating the IP address from a set of IP addresses reserved for use in private networks.

3. The method as recited in claim 1, wherein creating a locator comprises:
instantiating a locator object.

4. The method as recited in claim 3, further comprising:
garbage collecting the locator object when it is no longer used.

5. The method as recited in claim 1, wherein each one of the plurality of data streams is associated with the same one of the plurality of television channels.

6. The method as recited in any of claims 1 to 4, wherein the plurality of data streams are associated with two or more of the plurality of television channels.

7. The method as recited in claim 1, wherein each one of the plurality of data streams is associated with a single tuner.

8. The method as recited in claim 1, wherein the plurality of data streams are associated with two or more tuners.

9. The method as recited in claim 1, further comprising:
allocating a private IP address to be mapped to the locator.

10. The method as recited in claim 1, and further comprising:
obtaining a data stream locator associated with a one of the plurality of data streams;
providing the data stream locator to an interface map, the interface map being adapted for mapping one or more data stream locators to one or more IP addresses; and
receiving the IP address associated with the data stream locator from the interface map.

11. The method as claimed in claim 1, and further comprising:
obtaining (702) the IP address;
determining (704) whether the IP address corresponds to a data stream locator associated with a data stream; and
when it is determined that the IP address corresponds to a data stream locator associated with a data stream, selecting (710) the data stream associated with the data stream locator.

12. The method as recited in claim 11, further comprising:
instructing (710) a tuner to read the data stream associated with the data stream locator.

13. The method as recited in claim 12, wherein instructing a tuner to read the data stream associated with the data stream locator comprises instructing a tuner that is tuned to the data stream to read the data stream associated with the data stream locator.

14. The method as recited in claim 12, wherein instructing a tuner to read the data stream associated with the data stream locator comprises instructing a tuner that is currently unused to read the data stream associated with the data stream locator.

15. The method as recited in claim 11, further comprising releasing the IP address for future use when the IP address is no longer being used.

16. The method as recited in claim 11, wherein determining (704) whether the IP address corresponds to a data stream locator associated with a data stream is performed by an interface map (504) responsible for mapping one or more locator objects (L_{N}) to one or more IP addresses (L), each one of the locator objects being associated with a data stream, the method further comprising:
instructing the interface map to release the IP address for future use when the IP address is no longer being used.

17. The method as claimed in claim 1, and further comprising:
instantiating (304) a multicast object capable of listening for multicast data which is sent through the object, the object including a method for specifying an IP address, a method for specifying a multicast group address to listen in on, and a method for receiving packets addressed to the multicast address;
calling the method for specifying an IP address, the method instructing (710) a tuner to read a data stream associated with the IP address when the IP address corresponds to a data stream locator, and otherwise instructing (714) a network card to read data from the network;
calling (308) the method for specifying a multicast group address to specify a multicast group address associated with the IP address; and
calling (310) the method for receiving packets addressed to the multicast group address.

18. The method as recited in claim 17, further comprising:
garbage collecting the multicast object when it is no longer being used.

19. The method as claimed in claim 1, and further comprising:
obtaining an IP address;
determining (704) whether the IP address corresponds to a data stream locator associated with a data stream;
specifying (308) a multicast group address associated with the IP address;
when it is determined (706) that the IP address corresponds to a data stream locator associated with a data stream, instructing (710) a tuner to read the data stream associated with the data stream locator and to receive packets (310) addressed to the multicast group address; and
when it is determined (706) that the IP address does not correspond to a data stream locator associated with a data stream, instructing (714) a network card identified by the IP address to listen (310) to the multicast group address.

20. The method as recited in claim 19, further comprising:
receiving (310) packets addressed to the multicast group address.

21. The method as claimed in claim 1, and further comprising:
obtaining (702) an IP address, the IP address having an associated data stream locator;
instructing (710) a tuner to read a data stream associated with the data stream locator;
specifying (308) a multicast group address associated with the data stream; and
receiving (310) packets addressed to the multicast group address.

22. Computer program code executable by a data processor to provide the method of any preceding claim.

23. A computer program product for selecting a data stream, the computer program product comprising a computer-readable medium storing computer program code as claimed in claim 22.

24. A digital television receiver for selecting multicast IP data transmitted in broadcast streams, comprising:
a tuner;
a network card connected to a network;
a processor; and
a memory, the memory storing therein instructions to be carried out at the digital television receiver for:
obtaining (602) a data stream locator adapted for identifying data streams received at the digital television receiver;
associating (604) a data stream locator with each of a plurality of data streams, each one of the plurality of data streams being associated with one of a plurality of television channels;
mapping (606) each data stream locator to an IP address which is local to the digital television receiver and which uniquely identifies each data stream; and
instructing the tuner to read a data stream associated with an IP address when the IP address corresponds to a data stream locator and otherwise instructing the network card to read data from the network.

## Patentansprüche

1. Verfahren eines Identifizierens eines Multicast-IP-Datenstroms (Multicast-Gruppenruf) in einem digitalen Fernsehempfänger mit einer Abstimmvorrichtung und einer Netzwerkkarte, die mit einem Netzwerk verbunden ist, wobei das Verfahren an dem digitalen Fernsehempfänger ausgeführt wird und umfasst:
Erhalten (602) eines Datenstromlokalisierers, der angepasst zum Identifizieren von Datenströmen ist, die an dem digitalen Fernsehempfänger empfangen werden;
Verknüpfen (604) eines Datenstromlokalisierers mit jedem aus einer Vielzahl von Datenströmen, wobei jeder aus der Vielzahl von Datenströmen mit einem aus einer Vielzahl von Fernsehkanälen verknüpft ist;
Abbilden (606) jedes Datenstromlokalisierers auf einer IP-Adresse, die bei dem digitalen Fernsehempfänger lokalisiert ist und die eindeutig jeden Datenstrom identifiziert; und
Anweisen der Abstimmvorrichtung, um einen Datenstrom zu lesen, der mit einer IP-Adresse verknüpft ist, wenn die IP-Adresse einem Datenstromlokalisierer entspricht und ansonsten Anweisen der Netzwerkkarte, um die Daten von dem Netzwerk zu lesen.

2. Verfahren nach Anspruch 1, weiter mit:
Erzeugen der IP-Adresse aus einem Satz von IP-Adressen, die zur Verwendung in privaten Netzwerken reserviert sind.

3. Verfahren nach Anspruch 1, wobei ein Erzeugen eines Lokalisierers umfasst:
Instantiieren eines Lokalisiererobjekts.

4. Verfahren nach Anspruch 3, weiter mit:
Speicher-Bereinigen des Lokalisiererobjekts, wenn dieses nicht länger verwendet wird.

5. Verfahren nach Anspruch 1, wobei jeder einzelne aus der Vielzahl von Datenströmen mit dem gleichen aus der Vielzahl von Fernsehkanälen verknüpft ist.

6. Verfahren nach einem der Ansprüche 1 bis 4, wobei die Vielzahl von Datenströmen mit zwei oder mehr aus der Vielzahl von Fernsehkanälen verknüpft ist.

7. Verfahren nach Anspruch 1, wobei jeder einzelne aus der Vielzahl von Datenströmen mit einer einzelnen Abstimmvorrichtung verknüpft ist.

8. Verfahren nach Anspruch 1, wobei die Vielzahl von Datenströmen mit zwei oder mehr Abstimmvorrichtungen verknüpft ist.

9. Verfahren nach Anspruch 1, weiter mit:
Allozieren einer privaten IP-Adresse, die auf den Lokalisierer abgebildet werden soll.

10. Verfahren nach Anspruch 1 und weiter mit:
Erhalten eines Datenstromlokalisierers, der mit einem aus der Vielzahl von Datenströmen verknüpft ist; Bereitstellen des Datenstromlokalisierers an eine Schnittstellenabbildung, wobei die Schnittstellenabbildung angepasst zum Abbilden eines oder mehrerer Datenstromlokalisierer auf eine oder mehrere IP-Adressen ist; und
Empfangen der IP-Adresse, die mit dem Datenstromlokalisierer verknüpft ist, von der Schnittstellenabbildung.

11. Verfahren nach Anspruch 1 und weiter mit:
Erhalten (702) der IP-Adresse;
Bestimmen (704), ob die IP-Adresse einem Datenstromlokalisierer entspricht, der mit einem Datenstrom verknüpft ist; und
wenn es bestimmt wird, dass die IP-Adresse einem Datenstromlokalisierer entspricht, der mit einem Datenstrom verknüpft ist, Auswählen (710) des Datenstroms, der mit dem Datenstromlokalisierer verknüpft ist.

12. Verfahren nach Anspruch 11, weiter mit:
Anweisen (710) einer Abstimmvorrichtung, den Datenstrom zu lesen, der mit dem Datenstromlokalisierer verknüpft ist.

13. Verfahren nach Anspruch 12, wobei ein Anweisen einer Abstimmvorrichtung, den Datenstrom zu lesen, der mit dem Datenstromlokalisierer verknüpft ist, ein Anweisen einer Abstimmvorrichtung umfasst, die auf den Datenstrom abgestimmt ist, um den Datenstrom zu lesen, der mit dem Datenstromlokalisierer verknüpft ist.

14. Verfahren nach Anspruch 12, wobei ein Anweisen einer Abstimmvorrichtung, den Datenstrom zu lesen, der mit dem Datenstromlokalisierer verknüpft ist, ein Anweisen einer Abstimmvorrichtung umfasst, die gegenwärtig nicht verwendet wird, den Datenstrom zu lesen, der mit dem Datenstromlokalisierer verknüpft ist.

15. Verfahren nach Anspruch 11, weiter mit einem Freigeben der IP-Adresse zur zukünftigen Verwendung, wenn die IP-Adresse nicht länger verwendet wird.

16. Verfahren nach Anspruch 11, wobei ein Bestimmen (704), ob die IP-Adresse einem Datenstromlokalisierer entspricht, der mit einem Datenstrom verknüpft ist, durch eine Schnittstellenabbildung (504) durchgeführt wird, die für ein Abbilden eines oder mehrerer Lokalisiererobjekte (L_{N}) auf eine oder mehrere IP-Adressen (L) verantwortlich ist, wobei jedes einzelne der Lokalisiererobjekte mit einem Datenstrom verknüpft ist, wobei das Verfahren weiter umfasst:
Anweisen der Schnittstellenabbildung die IP-Adresse zur zukünftigen Verwendung freizugeben, wenn die IP-Adresse nicht länger verwendet wird.

17. Verfahren nach Anspruch 1 und weiter mit:
Instantiieren (304) eines Multicast-Objekts, das in der Lage ist nach Muliticast-Daten abzuhören, die über das Objekt gesendet werden, wobei das Objekt ein Verfahren zum Spezifizieren einer IP-Adresse, ein Verfahren zum Spezifizieren einer Multicastgruppen-Adresse, um auf diese abzuhören und ein Verfahren zum Empfangen von Paketen umfasst, die an die Multicast-Adresse adressiert sind;
Aufrufen des Verfahrens zum Spezifizieren einer IP-Adresse, wobei das Verfahren eine Abstimmvorrichtung anweist, einen Datenstrom zu lesen, der mit der IP-Adresse verknüpft ist, wenn die IP-Adresse einem Datenstromlokalisierer entspricht (710) und ansonsten eine Netzwerkkarte anweist, Daten von dem Netzwerk zu lesen (714);
Aufrufen (308) des Verfahrens zum Spezifizieren einer Multicastgruppen-Adresse, um eine Multicastgruppen-Adresse zu spezifizieren, die mit der IP-Adresse verknüpft ist; und
Aufrufen (310) des Verfahrens zum Empfangen von Paketen, die an die Multicastgruppen-Adresse adressiert sind.

18. Verfahren nach Anspruch 17, weiter mit:
Speicherbereinigen des Multicast-Objekts, wenn dieses nicht länger verwendet wird.

19. Verfahren nach Anspruch 1 und weiter mit:
Erhalten einer IP-Adresse;
Bestimmen (704), ob die IP-Adresse einem Datenstromlokalisierer entspricht, der mit einem Datenstrom verknüpft ist;
Spezifizieren (308) einer Multicastgruppen-Adresse, die mit der IP-Adresse verknüpft ist;
wenn bestimmt wird (706), dass die IP-Adresse einem Datenstromlokalisierer entspricht, der mit einem Datenstrom verknüpft ist, Anweisen (710) einer Abstimmvorrichtung, den Datenstrom zu lesen, der mit dem Datenstromlokalisierer verknüpft ist und Pakete zu empfangen (310), die an die Multicastgruppen-Adresse adressiert sind; und
wenn es bestimmt wird (706), dass die IP-Adresse keinem Datenstromlokalisierer entspricht, der mit einem Datenstrom verknüpft ist, Anweisen (714) einer Netzwerkkarte, die durch die IP-Adresse identifiziert wird, die Multicastgruppen-Adresse abzuhören (310).

20. Verfahren nach Anspruch 19, weiter mit:
Empfangen (310) von Paketen, die an die Multicastgruppen-Adresse adressiert sind.

21. Verfahren nach Anspruch 1 und weiter mit:
Erhalten (702) einer IP-Adresse, wobei die IP-Adresse einen zugeordneten Datenstromlokalisierer aufweist;
Anweisen (710) einer Abstimmvorrichtung, einen Datenstrom zu lesen, der mit dem Datenstromlokalisierer verknüpft ist;
Spezifizieren (308) einer Multicastgruppen-Adresse, die mit dem Datenstrom verknüpft ist; und
Empfangen (310) von Paketen, die an die Multicastgruppen-Adresse adressiert sind.

22. Computerprogrammcode, der von einem Datenprozessor ausführbar ist, um das Verfahren nach einem der vorangehenden Ansprüche bereitzustellen.

23. Computerprogrammprodukt zum Auswählen eines Datenstroms, wobei das Computerprogrammprodukt ein Computer-lesbares Medium umfasst, das einen Computerprogrammcode nach Anspruch 22 speichert.

24. Digitaler Fernsehempfänger zum Auswählen von Multicast-IP-Daten, die in Rundfunkströmen übertragen werden, mit:
einer Abstimmvorrichtung;
einer Netzwerkkarte, die mit einem Netzwerk verbunden ist;
einem Prozessor; und
einem Speicher, wobei der Speicher in sich Anweisungen speichert, die bei dem digitalen Fernsehempfänger ausgeführt werden sollen, zum:
Erhalten (602) eines Datenstromlokalisierers, der zum Identifizieren von Datenströmen angepasst ist, die an dem digitalen Fernsehempfänger empfangen werden;
Verknüpfen (604) eines Datenstromlokalisierers mit jedem aus einer Vielzahl von Datenströmen, wobei jeder einzelne aus der Vielzahl von Datenströmen mit einem aus einer Vielzahl von Fernsehkanälen verknüpft ist;
Abbilden (606) jedes Datenstromlokalisierers auf eine IP-Adresse, die an dem digitalen Fernsehempfänger lokalisiert ist und die eindeutig jeden Datenstrom identifiziert; und
Anweisen der Abstimmvorrichtung, einen Datenstrom zu lesen, der mit einer IP-Adresse verknüpft ist, wenn die IP-Adresse einem Datenstromlokalisierer entspricht und ansonsten Anweisen der Netzwerkkarte, Daten von dem Netzwerk zu lesen.

## Revendications

1. Procédé d'identification de flux de données IP de multidiffusion dans un récepteur de télévision numérique comportant un syntoniseur et une carte réseau connectée à un réseau, la procédé étant mis en oeuvre dans le récepteur de télévision numérique et comporte les étapes suivantes :
obtenir (602) un localisateur de flux de données adapté pour identifier des flux de données reçus dans le récepteur de télévision numérique ;
associer (604) un localisateur de flux de données à chaque flux parmi une pluralité de flux de données, chaque flux parmi la pluralité de flux de données étant associé à un canal parmi une pluralité de canaux de télévision ;
mettre en correspondance (606) chaque localisateur de flux de données avec une adresse IP qui est locale au récepteur de télévision numérique et qui identifie de manière unique chaque flux de données ; et
ordonner au syntoniseur de lire un flux de données associé à une adresse IP lorsque l'adresse IP correspond à un localisateur de flux de données et sinon ordonner à la carte réseau de lire des données à partir du réseau.

2. Procédé selon la revendication 1, comportant en outre l'étape suivante :
générer l'adresse IP depuis un ensemble d'adresses IP réservées pour l'utilisation dans des réseaux privés.

3. Procédé selon la revendication 1, dans lequel la création d'un localisateur comporte l'étape suivante :
instantier un objet de localisateur.

4. Procédé selon la revendication 3, comportant en outre l'étape suivante :
récupérer l'espace mémoire de l'objet de localisateur lorsqu'il n'est plus utilisé.

5. Procédé selon la revendication 1, dans lequel chaque flux parmi la pluralité de flux de données est associé au même canal parmi la pluralité de canaux de télévision.

6. Procédé selon l'une quelconque des revendications 1 à 4, dans lequel la pluralité de flux de données sont associés à deux ou plus de deux canaux parmi la pluralité de canaux de télévision.

7. Procédé selon la revendication 1, dans lequel chaque flux parmi la pluralité de flux de données est associé à un seul syntoniseur.

8. Procédé selon la revendication 1, dans lequel la pluralité de flux de données sont associés à deux ou plus de deux syntoniseurs.

9. Procédé selon la revendication 1, comportant en outre l'étape suivante :
attribuer une adresse IP privée à mettre en correspondance avec le localisateur.

10. Procédé selon la revendication 1, et comportant en outre les étapes suivantes :
obtenir un localisateur de flux de données associé à un flux parmi la pluralité de flux de données ;
fournir le localisateur de flux de données à une table de correspondances d'interface, la table de correspondances d'interface étant adaptée pour mettre en correspondance un ou plusieurs localisateurs de flux de données avec une ou plusieurs adresses IP, et
recevoir l'adresse IP associée au localisateur de flux de données de la table de correspondances d'interface.

11. Procédé selon la revendication 1, et comportant en outre les étapes suivantes :
obtenir (702) l'adresse IP ;
déterminer (704) si l'adresse IP correspond à un localisateur de flux de données associé à un flux de données; et
lorsqu'il est détermine que l'adresse IP correspond à un localisateur de flux de données associé à un flux de données, sélectionner (710) le flux de données associé au localisateur de flux de données.

12. Procédé selon la revendication 11, comportant en outre l'étape suivante :
ordonner (710) à un syntoniseur de lire le flux de données associé au localisateur de flux de données.

13. Procédé selon la revendication 12, dans lequel l'ordre donné à un syntoniseur de lire le flux de données associé au localisateur de flux de données comporte l'ordre à un syntoniseur qui est accordé sur la flux de données de lire le flux de données associé au localisateur de flux de données.

14. Procédé selon la revendication 12, dans lequel l'ordre donné à un syntoniseur de lire le flux de données associé au localisateur de flux de données comporte l'ordre à un syntoniseur qui est actuellement inutilisé de lire le flux de données associé au localisateur de flux de données.

15. Procédé selon la revendication 11, comportant en outre la libération de l'adresse IP en vue d'une utilisation ultérieure lorsque l'adresse IP n'est plus utilisée.

16. Procédé selon la revendication 11, dans lequel l'étape de déterminer (704) si l'adresse IP correspond à un localisateur de flux de données associé à un flux de données est exécutée par une table de correspondances d'interface (504) chargée de mettre en correspondance un ou plusieurs objets de localisateur (L_{N}) avec une ou plusieurs adresses IP (L), chacun des objets de localisateur étant associé à un flux de données, le procédé comportant en outre l'étape suivante :
ordonner à la table de correspondances d'interface de libérer l'adresse IP en vue d'une utilisation ultérieure lorsque l'adresse IP n'est plus utilisée.

17. Procédé selon la revendication 1, et comportant en outre les étapes suivantes:
instantier (304) un objet de multidiffusion capable de surveiller des données de multidiffusion qui sont envoyées à travers l'objet, l'objet incluant un procédé pour spécifier une adresse IP, un procédé pour spécifier une adresse de groupe de multidiffusion à surveiller, at un procédé pour recevoir des paquets adressés à l'adresse de multidiffusion ;
appeler le procédé pour spécifier une adresse IP, le procédé ordonnant (710) à un syntoniseur de lire un flux de données associé à l'adresse IP lorsque l'adresse IP correspond à un localisateur de flux de données, et sinon ordonner (614) à une carte réseau de lire des données à partir du réseau ;
appeler (308) le procédé pour spécifier une adresse de groupe de multidiffusion afin de spécifier une adresse de groupe de multidiffusion associée à l'adresse IP; et
appeler (310) le procédé pour recevoir des paquets adressés à l'adresse de groupe de multidiffusion.

18. Procédé selon la revendication 17, comportant en outre l'étape suivante :
récupérer l'espace mémoire de l'objet de multidiffusion lorsqu'il n'est plus utilisé.

19. Procédé selon la revendication 1, et comportant en outre les étapes suivantes :
obtenir une adresse IP ;
déterminer (704) si l'adresse IP correspond à un localisateur de flux de données associé à un flux de données ;
spécifier (308) une adresse de groupe de multidiffusion associée à l'adresse IP ;
lorsqu'il est déterminé (706) que l'adresse IP correspond à un localisateur de flux de données associé à un flux de données, ordonner (710) à un syntoniseur de lire le flux de données associé au localisateur de flux de données et de recevoir des paquets (310) adressés à l'adresse de groupe de multidiffusion ; et
lorsqu'il est déterminé (706) que l'adresse IP ne correspond pas à un localisateur de flux de données associé à un flux de données, ordonner (714) à une carte de réseau identifiée par l'adresse IP de surveiller (310) l'adresse de groupe de multidiffusion.

20. Procédé selon la revendication 19, comportant en outre l'étape suivante :
recevoir (310) des paquets adressés à l'adresse de groupe de multidiffusion.

21. Procédé selon la revendication 1, et comportant en outra l'étape suivante :
obtenir (702) une adresse IP, l'adresse IP ayant un localisateur de flux de données associé,
ordonner (710) à un syntoniseur de lire un flux de données associé au localisateur de flux de données ;
spécifier (308) une adresse de groupe de multidiffusion associée au flux de données ; et
recevoir (310) des paquets adressés à l'adresse de groupe de multidiffusion.

22. Code de programme informatique exécutable par un processeur de données pour fournir le procédé selon l'une quelconque des revendications précédentes.

23. Produit de programme informatique pour sélectionner un flux de données, le produit de programme informatique comportant un support lisible par ordinateur mémorisant du code de programme informatique comme revendiqué dans la revendication 22.

24. Récepteur de télévision numérique pour sélectionner des données IP de multidiffusion transmises dans des flux de radiodiffusion, comportant :
un syntoniseur ;
une carte de réseau connectée à un réseau ;
un processeur ; et
une mémoire, la mémoire stockant des instructions à exécuter dans le récepteur de télévision pour :
obtenir (602) un localisateur de flux de données adapté pour identifier des flux de données reçus dans le récepteur de télévision numérique ;
associer (604) un localisateur de flux de données à chaque flux parmi une pluralité de flux de données, chaque flux parmi la pluralité de flux de données étant associé à un canal parmi une pluralité de canaux de télévision ;
mettre en correspondance (606) chaque localisateur de flux de données avec une adresse IP qui est locale au récepteur de télévision numérique et qui identifie uniquement chaque flux de données ; et
ordonner au syntoniseur de lire un flux de données associé à une adresse IP lorsque l'adresse IP correspond à un localisateur de flux de données et sinon ordonner à la carte de réseau de lire des données à partir du réseau.
